# EUROPÄISCHE PATENTSCHRIFT

(11) **EP 2 178 971 B1**
(45) Veröffentlichungstag und Bekanntmachung des Hinweises auf die Patenterteilung: **07.03.2012**
(21) Anmeldenummer: 08787076.2
(22) Anmeldetag: 11.08.2008
(51) Int. Cl.: C08L 29/04, C08L 31/04, C08L 23/08, C09J 123/08

(54) **SILAN-MODIFIZIERTE ADDITIVE UND SILAN-MODIFIZIERTE POLYMERZUSAMMENSETZUNGEN**
SILANE MODIFIED ADDITIVES AND SILANE MODIFIED POLYMER COMPOUNDS
ADDITIFS MODIFIÉS AU SILANE ET COMPOSITIONS POLYMÈRES MODIFIÉES AU SILANE

(30) Priorität: 14.08.2007 DE 102007038333
(43) Veröffentlichungstag der Anmeldung: 28.04.2010
(73) Patentinhaber: Wacker Chemie AG, 81737 München (DE)
(72) Erfinder: HASHEMZADEH, Abdulmajid, 84508 Burgkirchen (DE); KILLAT, Marion, 84489 Burghausen (DE)
(74) Vertreter: Schuderer, Michael
(86) Internationale Anmeldenummer: PCT/EP2008/060501
(87) Internationale Veröffentlichungsnummer: WO 2009/021929

(56) Entgegenhaltungen:
- EP-A- 1 134 255
- WO-A-2006/058655
- WO-A-2007/048714

## Beschreibung

Die Erfindung betrifft Silan-modifizierte Additive, Verfahren zu deren Herstellung und deren Verwendung, sowie Silan-modifizierte Polymerzusammensetzungen, Verfahren zu deren Herstellung und deren Verwendung beispielsweise in Beschichtungsmitteln oder Klebemitteln, insbesondere als Haftvermittler in hydraulisch abbindenden Systemen.

Organosiliciumverbindungen, wie beispielsweise Silane oder Siloxane, werden häufig in Polymerzusammensetzungen als Hydrophobierungsmittel oder als Haftvermittler eingesetzt. Zur Herstellung entsprechender Polymerzusammensetzungen in Form von Dispersionspulvern wird in der DE 4402408 A1 vorgeschlagen, ethylenisch ungesättigte organische Monomere in Gegenwart von in Wasser dispergierbaren Organosiliciumverbindungen zu polymerisieren und die so erhältlichen Polymerdispersionen anschließend mittels Sprühtrocknung zu trocknen. In der DE 4402409 A1 wird vorgeschlagen, wässrige Polymerdispersionen und in Wasser dispergierbare Organosiliciumverbindungen gemeinsam zu versprühen, um entsprechend hydrophobierte Dispersionspulver zu erhalten. In der DE 10040407 A1 werden Polymerdispersionen für Fliesenklebstoffe mit Organosiliciumverbindungen und Thioharnstoffverbindungen modifiziert. Dazu werden ethylenisch ungesättigte Organosiliciumverbindungen und (Thio)harnstoff funktionelle Monomere mit ethylenisch ungesättigten organischen Monomeren copolymerisiert oder niedermolekulare Verbindungen mit entsprechenden Funktionalitäten zu Polymerdispersionen gegeben. Aus der EP 640630 A1 ist bekannt, zur Verbesserung der Nasshaftung von Klebemassen wässrige Dispersionen von Polymerisaten enthaltend Vinylsilan-Einheiten einzusetzen. Wässrige Dispersionen von Copolymerisaten enthaltend Silan-funktionelle Einheiten und deren Anwendung in Fliesenklebern sind auch aus der DE-OS 2148456 und der EP 0035332 A2 bekannt. Aus der EP 2006067366 A1 ist bekannt, Organosiliciumverbindungen in Dispersionspulvern zur verbesserten Haftung von Fliesenklebern einzusetzen.

Ein Problem besteht jedoch darin, Zusammensetzungen enthaltend Organosiliciumverbindungen und Polymere in lagerstabiler Form bereit zu stellen. In wässrigen Polymerzusammensetzungen neigen Organosiliciumverbindungen dazu, sich von der wässrigen Phase abzutrennen und eine unkontrollierte Selbstkondensation einzugehen, so dass eine Zunahme der Viskosität oder sogar Vergelung auftritt. Aber auch wenn Organosiliciumverbindungen enthaltende Polymerzusammensetzungen in fester Form vorliegen, tritt in Gegenwart von Restfeuchtigkeit oder auf Grund von Luftfeuchtigkeit eine unkontrollierte Selbstkondensation der Organosiliciumverbindungen auf, so dass sich entsprechende Polymerzusammensetzungen nicht mehr vollständig in Wasser aufnehmen lassen. Die geschilderten Probleme treten insbesondere in Polymerzusammensetzungen mit hohen Gehalten an Organosiliciumverbindungen auf.

Des Weiteren liegen die Organosiliciumverbindungen und die Polymere in den aus dem Stand der Technik bekannten Polymerzusammensetzungen in fertigen Abmischungen vor, so dass die Anpassung des Abmischungsverhältnisses der einzelnen Komponenten an die jeweiligen Anforderungen bei unterschiedlichen Anwendungen nicht in beliebiger und ökonomischer Weise erfolgen kann.

Vor diesem Hintergrund bestand die Aufgabe, Silan-modifizierte Additive bereit zu stellen, die sowohl in wässriger Form als auch in fester Form selbst bei hohen Silan-Gehalten lagerstabil sind und in beliebigen Verhältnissen mit Polymeren zu lagerstabilen Polymerzusammensetzungen abmischbar sind.

Die Aufgabe wurde überraschenderweise mit Silan-modifizierten Additiven gelöst, die erhalten wurden, indem Silane durch Mischen mit einem wässrigen Lösungsmittel in Gegenwart von wasserlöslichen Polymeren kondensiert wurden, wobei durch die Gegenwart der erfindungsgemäßen Menge an wasserlöslichen Polymeren und in Folge des Mischens eine Phasenseparation oder eine unkontrollierte Kondensation der Silane unterbleibt.

Aus der DE 102005051588 sind Zusammensetzungen bekannt, die Silan-modifizierte Additive mit weniger als 60 Gew.% an wasserlösliches Polymer enthalten.

Gegenstand der Erfindung sind Silan-modifizierte Additive erhältlich durch Kondensation von einem oder mehreren Silanen der allgemeinen Formel

(RO)₃₋₁R¹ₙSi (R²X) (1),

worin
R einen gegebenenfalls substituierten Alkyl-, Aryl- oder Alkoxyalkylrest mit 1 bis 10 Kohlenstoffatomen oder Wasserstoff,
R¹ einen gegebenenfalls substituierten Kohlenwasserstoffrest mit 1 bis 12 Kohlenstoffatomen oder Wasserstoff,
R² einen gegebenenfalls substituierten Alkylen-Rest mit 1 bis 20 Kohlenstoffatomen ist, in dem einander nicht benachbarte Methyleneinheiten durch Gruppen -O- ersetzt sein können, und
X über eine kovalente Bindung an R² gebunden ist und einen Aminorest NHR³, einen Epoxyrest CR⁴(O)CR⁵R⁶, einen Urethanrest NR³-C(=O)OR³, einen Harnstoffrest NR³-C(=O)NR³R⁴, ein Phosphorsäurerest P(=O)(OH)₂, ein Anhydridrest C(=O) O (O=) CR³ oder einen Carbonsäurerest bedeutet, wobei
R³ Wasserstoff oder einen gegebenenfalls substituierten Alkyl-, Aryl- oder Aminoalkyrest mit 1 bis 10 Kohlenstoffatomen bedeutet,
R⁴, R⁵, R⁶ Wasserstoff oder einen gegebenenfalls substituierten Alkyl- oder Arylrest mit 1 bis 10 Kohlenstoffatomen bedeutet, wobei die jeweiligen Reste R¹, R², R³, R⁴, R⁵ und R⁶ ihre Werte jeweils unabhängig voneinander annehmen, und
n den Wert 0, 1, 2 oder 3 annimmt,
in einem wässrigen Lösungsmittel unter Mischen mit einem oder mehreren wasserlöslichen Polymeren,
wobei der Gehalt an wasserlöslichen Polymeren 60 bis 97 Gew.-% und der Gehalt an silanen 3 bis 40 Gew.-% ist, bezogen auf die Trockenmasse der Silan-modifizierten Additive, und gegebenenfalls Trocknung der so erhaltenen wässrigen Mischung.

Vorzugsweise bedeutet R der Formel (1) Methyl, Ethyl oder Propyl.

Vorzugsweise sind die Reste R¹ der Formel (1) nicht substituiert. Besonders bevorzugt bedeutet R¹ einen Kohlenwasserstoffrest mit 1 bis 6 Kohlenstoffatomen, am meisten bevorzugt Methyl, Ethyl, Propyl, Vinyl oder Phenyl.

Vorzugsweise sind die Reste R² der Formel (1) nicht substituiert. Besonders bevorzugt bedeutet R² einen Alkylen-Rest mit 1 bis 6 Kohlenstoffatomen, am meisten bevorzugt Methylen, Ethylen, Propylen.

Vorzugsweise bedeutet R³ der Formel (1) Wasserstoff oder einen Kohlenwasserstoffrest mit 1 bis 6 Kohlenstoffatomen, besonders bevorzugt Wasserstoff, 2-Aminoethyl, Phenyl, Cyclohexyl, Methyl, Ethyl, Propyl oder Butyl.

R⁴, R⁵, R⁶ der Formel (1) bedeuten bevorzugt Wasserstoff.

Alle Symbole der Formel (1) weisen ihre Bedeutungen jeweils unabhängig voneinander auf. In allen Ausführungsformen der Formel (1) ist das Siliciumatom jeweils vierwertig.

Bevorzugt werden Aminopropyltrialkoxysilane der Formel (1) und Glycidoxypropyltrialkoxysilane der Formel (1) eingesetzt.

Bevorzugt werden auch (3-Aminopropyl)triethoxysilan, (3-Aminopropyl)trimethoxysilan, N-(2-Aminoethyl)(3-Aminopropyl)-triethoxysilan, N-(2-Aminoethyl)(3-Aminopropyl)trimethoxysilan, N-(2-Aminoethyl)(3-Aminopropyl)methyldimethoxysilan, 3-(Triethoxysilyl)propylbernsteinsäureanhydrid, N-Cyclohexylaminomethylmethyldiethoxysilan, N-(3-(Triethoxysilyl)propyl)-methylurethan, N-(3-(Trimethoxysilyl)propyl)-methylurethan, N-(3-(Triethoxysilyl)propyl)-harnstoff, N-(3-(Trimethoxysilyl)-propyl)-harnstoff, (3-Glycidoxypropyl)triethoxysilan, und (3-Glycidoxypropyl)trimethoxysilan.

Die erfindungsgemäß eingesetzten Silane der Formel (1) sind handelsübliche Produkte oder in der Siliciumchemie nach gängigen Methoden herstellbar, beispielsweise nach Verfahren wie sie in Noll, Chemie und Technologie der Silikone, 2. Auflage 1968, Weinheim, und in Houben-Weyl, Methoden der organischen Chemie, Band E20, Georg Thieme Verlag, Stuttgart (1987) beschrieben sind.

Geeignete wasserlösliche Polymere sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Cresolformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie E-then und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten wasserlöslichen Polymere sind mittels dem Fachmann bekannter Verfahren zugänglich.

Die wasserlöslichen Polymere weisen unter Normalbedingungen nach DIN50014 in Wasser eine Löslichkeit von mindestens 10 g/l auf.

Bei der Herstellung der Silan-modifizierten Additive beträgt der Anteil von einem oder mehreren Silanen der Formel (1) vorzugsweise 3 bis 40 Gew.-%, besonders bevorzugt 10 bis 35 Gew.-%, ganz besonders bevorzugt 15 bis 35 Gew.-%, am meisten bevorzugt 16 bis 35 Gew.-%, jeweils bezogen auf die Trockenmasse der Silan-modifizierten Additive. Die Silan-modifizierten Additive enthalten die wasserlöslichen Polymere zu vorzugsweise 70 bis 85 Gew.-% und am meisten bevorzugt zu 70 bis 83 Gew.-%, jeweils bezogen auf die Trockenmasse der Silan-modifizierten Additive.

Während der Kondensation können zusätzlich Emulgatoren zugegen sein. Wird die Kondensation in Gegenwart von Emulgatoren durchgeführt, beträgt deren Menge vorzugsweise 1 bis 5 Gew.-% bezogen auf das Gewicht der Silane der Formel (1). Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Ein weiterer Gegenstand der Erfindung ist ein Verfahren zur Herstellung von Silan-modifizierten Additiven, dadurch gekennzeichnet, dass ein oder mehrere Silane der allgemeinen Formel

(RO)₃₋ₙR¹ₙSi(R²X) (1),

worin
R einen gegebenenfalls substituierten Alkyl-, Aryl- oder Alkoxyalkylrest mit 1 bis 10 Kohlenstoffatomen oder Wasserstoff,
R¹ einen gegebenenfalls substituierten Kohlenwasserstoffrest mit 1 bis 12 Kohlenstoffatomen oder Wasserstoff,
R² einen gegebenenfalls substituierten Alkylen-Rest mit 1 bis 20 Kohlenstoffatomen ist, in dem einander nicht benachbarte Methyleneinheiten durch Gruppen -O- ersetzt sein können, und
X über eine kovalente Bindung an R² gebunden ist und einen Aminorest NHR³, einen Epoxyrest CR⁴ (O) CR⁵R⁶, einen Urethanrest NR³- C (=O) OR³, einen Harnstoffrest NR³-C (=O) NR³R⁴, ein Phosphorsäurerest P (=O) (OH)₂, ein Anhydridrest C(=O)O(O=)CR³ oder einen Carbonsäurerest bedeutet, wobei
R³ Wasserstoff oder einen gegebenenfalls substituierten Alkyl-, Aryl- oder Aminoalkyrest mit 1 bis 10 Kohlenstoffatomen bedeutet,
R⁴, R⁵, R⁶ Wasserstoff oder einen gegebenenfalls substituierten Alkyl- oder Arylrest mit 1 bis 10 Kohlenstoffatomen bedeutet, wobei die jeweiligen Reste R¹, R², R³, R⁴, R⁵ und R⁶ ihre Werte jeweils unabhängig voneinander annehmen, und
n den Wert 0, 1, 2 oder 3 annimmt,
in einem wässrigen Lösungsmittel unter Mischen mit einem oder mehreren wasserlöslichen Polymeren kondensiert werden wobei die Gehälte an wasserlöslichen Polymeren und an silanen wie im Anspruch 6 sind bezogen auf die Trockenmasse der Silan-modifizierten Additive, und
die so erhaltene wässrige Mischung gegebenenfalls getrocknet wird.

Das wässrige Lösungsmittel kann Wasser oder ein Lösungsmittelgemisch aus Wasser und einem oder mehreren organischen Lösungsmitteln sein. Geeignete organische Lösungsmittel sind beispielsweise Alkohole wie Methanol oder Ethanol. Bevorzugt ist die Durchführung der Kondensation in Wasser.

Vorzugsweise sind die wasserlöslichen Polymere und die Silane der Formel (1) bzw. deren Kondensationsprodukte zu Beginn, während und nach der Kondensation im wässrigen Lösungsmittel homogen gelöst.

Die Silane (1) bzw. die wasserlöslichen Polymere können in reiner Form oder in einem wässrigen Lösungsmittel eingesetzt werden. Die Silane (1) werden vorzugsweise in reiner Form eingesetzt. Die Silane (1) und die wasserlöslichen Polymere können in einem wässrigen Lösungsmittel für die Kondensation komplett vorgelegt werden. Alternativ kann ein Teil der Silane (1) bzw. der wasserlöslichen Polymere für die Kondensation vorgelegt werden, und der verbleibende Rest der Silane (1) bzw. der wasserlöslichen Polymere kann während der Kondensation zugegeben werden. Vorzugsweise werden die wasserlöslichen Polymere in einem wässrigen Lösungsmittel vorgelegt und die Silane (1) werden in reiner Form ganz oder teilweise während der Kondensation zugegeben.

Die Temperatur während der Kondensation beträgt vorzugsweise 1 bis 100° C, besonders bevorzugt 20 bis 80° C und am meisten bevorzugt 40 bis 80° C. Die Reaktionszeit der Kondensation beträgt vorzugsweise 4 bis 19 Stunden, besonders bevorzugt 4 bis 7 Stunden. Der pH-Wert während der Kondensation liegt vorzugsweise zwischen 2 und 11 und kann in bekannter Weise durch organische sowie anorganische Säuren, Basen oder Puffer eingestellt werden, wie beispielsweise durch Zugabe von Salzsäure, Ammoniak oder Erdalkali- bzw. Alkalihydroxiden, wie beispielsweise Natronlauge. Der pH-Wert kann auch durch die Silane (1) eingestellt werden, sofern die Silane (1) einen Aminorest, einen Carbonsäurerest oder einen Phosphorsäurerest tragen. Werden Silane (1) eingesetzt, in denen der Rest X ein Aminorest NHR³ ist, ist der pH-Wert bei der Kondensation vorzugsweise zwischen 8 und 9. Für den Fall dass der Rest X ein Epoxyrest CR⁴(O)CR⁵R⁶ ist, ist der pH-Wert vorzugsweise zwischen 4 und 7. Werden Silane (1) eingesetzt, in denen der Rest X eine Carbonsäure- oder Anhydridgruppe ist, ist der pH-Wert vorzugsweise zwischen 3 und 5.

Werden mehrere unterschiedliche Silane (1) einer Kondensation zugeführt, so werden hierfür vorzugsweise solche Silane (1) ausgewählt, die sich nicht durch kovalente Bindungen über die Reste X miteinander verknüpfen können; d.h. bei Einsatz von Silanen (1), in denen der Rest X für einen Aminorest NHR³ steht, werden vorzugsweise keine weiteren Silane (1) eingesetzt, bei denen der Rest X beispielsweise für einen Epoxyrest CR⁴ (O) CR⁵R⁶ oder Anhydridrest C(=O)O(O=)CR³ steht.

Durch die Kondensation erfolgt im wesentlichen eine Selbstkondensation von Silanen unter Ausbildung von Si-O-Si-Bindungen. Eine Pfropfung der wasserlöslichen Polymere mit Silanen oder mit Kondensationsprodukten der Silane (1) findet praktisch nicht statt. Durch die Kondensation der Silane (1) werden bevorzugt mindestens 25%, besonders bevorzugt mindestens 30% der hydrolisierbaren Bindungen der Silane der Formel (1) kondensiert, bezogen auf die Gesamtzahl der hydrolysierbaren Siliciumbindungen der eingesetzten Silane (1). Die hydrolisierbaren Bindungen der Silane (1) sind im wesentlichen die Bindungen zwischen dem Siliciumatom und den Resten RO.

Die Beiprodukte der Kondensationsreaktion können mittels Destillation, vorzugsweise unter reduziertem Druck, und gegebenenfalls unter Durchleiten oder Überleiten von Schleppgasen wie Luft, Stickstoff oder Wasserdampf entfernt werden.

Die nach dem erfindungsgemäßen Verfahren erhältlichen wässrigen Mischungen der Silan-modifizierten Additive liegen in Form von wässrigen Lösungen, wässrigen Emulsionen oder wässrigen Dispersionen vor und haben vorzugweise einen Feststoffgehalt von ≥ 15 Gew.-%, besonders bevorzugt von 15 bis 60 Gew.-% und am meisten bevorzugt von 15 bis 50 Gew.-% und sind in der jeweiligen Ausführungsform lagerstabil. Vorzugsweise liegen die Silan-modifizierten Additive als wässrige Lösung oder in Form von in Wasser löslichen Pulvern vor.

Zur Herstellung der Silan-modifizierten Additive in Form von Pulvern werden die nach dem erfindungsgemäßen Verfahren erhaltenen wässrigen Mischungen getrocknet, gegebenenfalls unter Zusatz von Schutzkolloiden als Trocknungshilfe. Geeignete Trocknungsverfahren sind beispielsweise die Wirbelschichttrocknung, die Gefriertrocknung oder die Sprühtrocknung. Geeignete Trocknungshilfsmittel sind beispielsweise die oben genannten wasserlöslichen Polymere oder auch kationische synthetische Polymere. Vorzugsweise werden Polyvinylalkohole als Trocknungshilfsmittel eingesetzt, wobei die als wasserlöslichen Polymere bevorzugten Polyvinylalkohole auch bevorzugt als Trocknungshilfsmittel eingesetzt werden. Vorzugsweise werden die wässrigen Mischungen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C gewählt.

Bei der Trocknung hat sich vielfach ein Gehalt von bis zu 1.5 Gew.-% Antischaummittel, bezogen auf die polymeren Bestandteile, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäuren wie beispielsweise hochdisperse Kieselsäuren, Kaoline, Metakaolin, calciniertes Kaolin, Silicate mit Teilchengrößen vorzugsweise im Bereich von 10 nm bis 100 µm.

Die Viskosität der zu trocknenden wässrigen Mischung wird über den Feststoffgehalt so eingestellt, dass ein Wert von < 1500 mPas (Brookfield-Viskosität bei 20 Umdrehungen und 23°C), bevorzugt < 500 mPas, erhalten wird. Der Feststoffgehalt der zu trocknenden Mischung beträgt > 35 %.

Zur Verbesserung der anwendungstechnischen Eigenschaften können den Silan-modifizierten Additiven weitere Zusätze zugegeben werden. Weitere, in bevorzugten Ausführungsformen enthaltene, Bestandteile der Silan-modifizierten Additive sind beispielsweise Pigmente, Füllstoffe wie beispielsweise Kieselsäuren oder Zeolithe, Schaumstabilisatoren, Hydrophobierungsmittel oder Luftporenbildner. Vorzugsweise werden diese Zusätze den wässrigen Silan-modifizierten Additiven bzw. während oder nach der Trocknung der wässrigen Silan-modifizierten Additive zugegeben.

Ein weiterer Gegenstand der Erfindung sind Silan-modifizierte Polymerzusammensetzungen in Form von wässrigen Dispersionen oder in Wasser redispergierbaren Pulvern, dadurch gekennzeichnet, dass ein oder mehrere Silan-modifizierte Additive und ein oder mehrere wasserunlösliche Polymere enthalten sind.

Die wasserunlöslichen Polymere weisen unter Normalbedingungen nach DIN50014 eine Löslichkeit in Wasser von weniger als 1 g/l auf. Die einzelnen Bestandteile der Silan-modifizierten Polymerzusammentsetzung können in beliebigem Gewichtsverhältnis vorliegen.

Geeignete wasserunlösliche Polymere sind solche auf Basis von einem oder mehreren Monomeren ausgewählt aus der Gruppe der Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9R oder VeoVa10R (Handelsnamen der Firma Hexion). Besonders bevorzugt ist Vinylacetat. Bevorzugte sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat. Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Beispiele für als wasserunlösliche Polymere geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9R, VeoVa10R, Veo-Va11R; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten; Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der wasserunlöslichen Polymere erfolgt in wässrigem Medium und nach dem Emulsionspolymerisationsverfahren oder nach dem Suspensionspolymerisationsverfahren, vorzugsweise nach dem Emulsionspolymerisationsverfahren - wie beispielsweise in EP-A 2006067366 beschrieben. Die wasserunlöslichen Polymere fallen dabei in Form von wässrigen Dispersionen an und können nach gängigen Trocknungsverfahren in entsprechende in Wasser redispergierbare Pulver überführt werden.

Ein weiterer Gegenstand der Erfindung ist ein Verfahren zur Herstellung der Silan-modifizierten Polymerzusammensetzungen, dadurch gekennzeichnet, dass ein oder mehrere Silan-modifizierte Additive und ein oder mehrere wasserunlösliche Polymere gemischt werden.

Zur Herstellung der Silan-modifizierten Polymerzusammensetzungen können die wasserunlöslichen Polymere bzw. die Silan-modifizierten Additive unabhängig voneinander in Form von Pulvern oder in Form von wässrigen Mischungen eingesetzt werden. Vorzugsweise werden wässrige Dispersionen der wasserunlöslichen Polymere mit wässrigen Silan-modifizierten Additiven zu Silan-modifizierten Polymerzusammensetzungen in Form von wässrigen Dispersionen gemischt und anschließend gegebenenfalls zu Silan-modifizierten Polymerzusammensetzungen in Form von in Wasser redispergierbaren Pulvern getrocknet. Die Trocknung von Silan-modifizierten Polymerzusammensetzungen in Form von wässrigen Dispersionen kann nach gängigen Trocknungsverfahren erfolgen, wie oben für die Trocknung von wässrigen Mischungen der Silan-modifizierten Additive beschrieben. Bevorzugt ist auch das Mischen von wässrigen Dispersionen der wasserunlöslichen Polymere mit Silan-modifizierten Additiven in Form von Pulvern. Bevorzugt ist auch das Mischen der wasserunlöslichen Polymere in Form von in Wasser redispergierbaren Pulvern mit den Silan-modifizierten Additiven in Form von Pulvern oder wässrigen Mischungen.

Zur Verbesserung der anwendungstechnischen Eigenschaften können den Silan-modifizierten Polymerzusammensetzungen weitere Zusätze zugegeben werden. Geeignete Zusätze für die Silan-modifizierten Polymerzusammensetzungen sind beispielsweise die oben für die Silan-modifizierten Additive beschriebenen Zusätze. Vorzugsweise werden diese Zusätze den wässrigen Silan-modifizierten Polymerzusammensetzungen bzw. während oder nach der Trocknung der wässrigen Silan-modifizierten Polymerzusammensetzungen zugegeben.

Die Silan-modifizierten Additive sind beispielsweise zum Einsatz als Trocknungshilfsmittel bei der Trocknung von wässrigen Dispersionen von Polymeren, mittels Sprühtrocknung, Gefriertrocknung oder Wirbelschichttrocknung geeignet.

Die Silan-modifizierten Additive wirken insbesondere als Haftvermittler oder als Hydrophobierungsmittel und können in den typischen Anwendungsbereichen eingesetzt werden, wie beispielsweise im Textilbereich, in Papieranwendungen oder im Baubereich. Mit den Silan-modifizierten Additiven können beispielsweise Haftungsprobleme zwischen hydraulisch abbindenden Bindemitteln und Holz, Kork, Glasfaser oder Styropor behoben werden.

Vorteilhafterweise kann bei Herstellung der Silan-modifizierten Polymerzusammensetzungen nach dem erfindungsgemäßen Verfahren das Abmischungsverhältnis der Silan-modifizierten Additive und den weiteren Bestandteilen der Silan-modifizierten Polymerzusammensetzungen in beliebiger Weise gewählt werden.

Die Silan-modifizierten Additive oder die Silan-modifizierten Polymerzusammensetzungen werden vorzugsweise in bauchemischen Produkten eingesetzt, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas, für die Herstellung von Bauklebern, insbesondere Fliesenkleber und Vollwärmeschutzkleber, Putzen, Spachtelmassen wie beispielsweise Fußbodenspachtelmassen, Verlaufsmassen, Dichtschlämmen, Fugenmörtel und Farben. Weitere Anwendungen sind Spritzmörtel und Spritzbeton für Bauwerke des Hoch- und Tiefbaues sowie der Auskleidung von Tunnelwänden.

Besonders bevorzugte Anwendungsgebiete für die Silan-modifizierten Additive oder die Silan-modifizierten Polymerzusammensetzungen sind Fliesenkleber für Fliesen, insbesondere für Fliesen mit geringer Wasseraufnahme, am meisten bevorzugt für Fliesen mit einer Wasseraufnahme von ≤ 0.2 Gew.-%, insbesondere von ≤ 0.05 Gew.-%.

Vorteilhafterweise führt der Einsatz der Silan-modifizierten Additive oder der Silan-modifizierten Polymerzusammensetzungen in Fliesenklebern zu einer Verbesserung der Haftung von Fliesen, insbesondere von Feinsteinzeugfliesen auf den entsprechenden Untergründen.

Die folgenden Beispiele dienen der detaillierten Erläuterung der Erfindung und sind in keiner Weise als Einschränkung zu verstehen.

### Beispiele:

### Herstellung einer wässrigen Polyvinylalkohollösung:

In einem Doppelmantelreaktor mit Rührer und Rückflusskühler wurden 8 kg Wasser auf 40°C aufgeheizt und unter Rühren mit 2 kg Polyvinylalkoholgranulat (Mowiol 4-88, Verseifungsgrad von 88 Mol-%, Viskosität nach Höppler von 4 mPas, Firma Kuraray) versetzt. Anschließend wurde auf 90°C erwärmt und für 2 Stunden intensiv gerührt. Nach Abkühlung auf Raumtemperatur wurde die Lösung filtriert. Es wurde somit eine 20%ige, wässrige Polyvinylalkohollösung erhalten.

### Herstellung von Silan-modifizierten Additiven in Form von wässrigen Lösungen:

### Beispiel 1 (Bsp. 1):

In einem Doppelmantelreaktor mit Rührer wurden 8,04 kg der 20%igen, wässrigen Polyvinlylalkohollösung und 1,25 kg Wasser vorgelegt und auf 70°C aufgeheizt. Nach ca. 30 minütigem Rühren wurden 175 g N-(2-Aminoethyl)(3-aminopropyl)trimethoxysilan langsam zugegeben. Nach 5 stündigem Rühren bei 70°C wurden die flüchtigen Komponenten unter vermindertem Druck von der wässrigen Lösung entfernt und die Lösung auf Raumtemperatur abgekühlt.

### Beispiel 2 (Bsp. 2):

Es wurde analog zu Beispiel 1 vorgegangen, mit dem Unterschied, dass 15 Gew.-% N-(2-Aminoethyl)(3-aminopropyl)trimethoxysilan eingesetzt wurden, bezogen auf das Gewicht von Polyvinylalkohol.

### Beispiel 3 (Bsp. 3):

Es wurde analog zu Beispiel 1 vorgegangen, mit dem Unterschied, dass 20 Gew.-% N-(2-Aminoethyl)(3-aminopropyl)trimethoxysilan eingesetzt wurden, bezogen auf das Gewicht von Polyvinylalkohol.

### Beispiel 4 (Bsp. 4):

Es wurde analog zu Beispiel 3 vorgegangen, mit dem Unterschied, dass 30 Gew.-% N-(2-Aminoethyl)(3-aminopropyl)trimethoxysilan eingesetzt wurden, bezogen auf das Gewicht von Polyvinylalkohol.

### Vergleichbeispiel 1 (VGB 1):

Es wurde analog zu Beispiel 3 vorgegangen, mit dem Unterschied, dass die Polyvinylalkohollösung und N-(2-Aminoethyl) (3-aminopropyl)trimethoxysilan bei Raumtemperatur zusammengegeben und nach 30 minütigem Rühren bei Raumtemperatur direkt dem Phasenseparationstest unterzogen wurden.

### Vergleichsbeispiel 2 (VGB 2):

Es wurde analog zu Beispiel 4 vorgegangen, mit dem Unterschied, dass die Polyvinylalkohollösung und N-(2-Aminoethyl)(3-aminopropyl)trimethoxysilan nach 30 minütigem Rühren bei Raumtemperatur direkt dem Phasenseparationstest unterzogen wurde.

### Phasenseparationstest:

Die wässrigen Lösungen der Silan-modifizierten Additive der Beispiele 1 bis 4 sowie der Vergleichsbeispiele 1 und 2 wurden mit Wasser auf 10 Gew.-% verdünnt und jeweils in Standzylindern (Durchmesser 2 cm und Höhe 30 cm) eingefüllt. Nach 24 stündigem Stehenlassen bei Normalbedingungen nach DIN50014 wurde die Homogenität (ein- oder zweiphasig) der jeweiligen wässrigen Mischung beurteilt.

**Tabelle 1: Lagerstabilität der Silan-modifizierten Additive:**

| | Gewichtsanteil des jeweiligen Silans, bezogen auf Polyvinylalkohol [%] | Homogenität |
|---|---|---|
| Bsp. 1 | 11 | einphasig |
| Bsp. 2 | 15 | einphasig |
| Bsp. 3 | 20 | einphasig |
| Bsp. 4 | 30 | einphasig |
| VGB 1 | 20 | zweiphasig |
| VGB 2 | 30 | zweiphasig |

Aus den in Tabelle 1 festgehaltenen Ergebnisse geht hervor, dass die erfindungsgemäßen Silan-modifizierten Additive (Bsp. 1 bis 4) auch nach längerer Lagerung als einphasige und homogene Lösung vorliegen und somit lagerstabil sind im Gegensatz zu den entsprechenden Mischungen der Vergleichsbeispiele (VGB 1 und 2).

### Herstellung von Silan-modifizierten Additiven in Form von Pulvern:

Das jeweilige wässrige Silan-modifizierte Additiv wurde mittels einer Zweistoffdüse versprüht. Als Zerstäubungsmedium diente Druckluft (3 bar). Die Trocknung erfolgte mit auf 125°C erhitzter Luft im Gleichstrom. Das erhaltene trockene Pulver wurde mit 3-15 Gew.-% handelsüblichem Antiblockmittel versetzt.
Pulver P1:
   Wässriges Silan-modifiziertes Additiv aus Beispiel 1.
Pulver P2:
   Wässriges Silan-modifiziertes Additiv aus Beispiel 2.
Pulver P3:
   Wässriges Silan-modifiziertes Additiv aus Beispiel 3.
Pulver P4:
   Wässriges Silan-modifiziertes Additiv aus Beispiel 4.

### Vergleichspulver VP5:

An Stelle eines wässrigen Silan-modifizierten Additivs wurde eine wässrige Polyvinylalkohol-Lösung (FG = 20 Gew.-%) mit einem Verseifungsgrad von 88 Mol-% und einer Viskosität nach Höppler von 4 mPas eingesetzt.

### Vergleichspulver VP6:

Eine Trocknung der wässrigen Mischung aus Vergleichsbeispiel VGB 1 war nicht möglich, da ein zweiphasiges Gemisch vorlag und keine einheitliche Mischung erreicht wurde.

### Vergleichspulver VP7:

Eine Trocknung der wässrigen Mischung aus Vergleichsbeispiel VGB 2 war nicht möglich, da ein zweiphasiges Gemisch vorlag und keine einheitliche Mischung erreicht wurde.

### Herstellung von Silan-modifizierten Polymerzusammensetzungen unter Einsatz von wasserunlöslichen Polymeren in Form von wässrigen Dispersionen:

Das jeweilige wässrige Silan-modifizierte Additiv wurde mit einem polyvinylalkoholstabilisierten, in Wasser dispergierten Ethylen-Vinylacetat-Copolymerisat sowie gegebenenfalls mit einer Polyvinylalkoholmischung mit einem Verseifungsgrad von 88 Mol-% und einer Viskosität nach Höppler von 4 bis 13 mPas gemischt und anschließend analog zur Herstellung der Silan-modifizierten Additive in Form von Pulvern getrocknet, wodurch die jeweilige Silan-modifizierte Polymerzusammensetzung in Form ihres in Wasser redispergierbaren Pulvers erhalten wurde.

### Pulver P8:

60 Gew.-% Ethylen-Vinylacetat-Copolymer-Dispersion, 36 Gew.-% des wässrigen Silan-modifizierten Additivs aus Beispiel 2 und 4 Gew.-% Polyvinylalkohol, wobei sich die Angaben in Gew.-% auf das Gesamtgewicht der Trockenmischung beziehen.

### Pulver P9:

73 Gew.-% Ethylen-Vinylacetat-Copolymer-Dispersion, 23 Gew.-% des wässrigen Silan-modifizierten Additivs aus Beispiel 2 und 4 Gew.-% Polyvinylalkohol, wobei sich die Angaben in Gew.-% auf das Gesamtgewicht der Trockenmischung beziehen.

### Pulver P10:

81 Gew.-% Ethylen-Vinylacetat-Copolymer-Dispersion, 15 Gew.-% des wässrigen Silan-modifizierten Additivs aus Beispiel 2 und 4 Gew.-% Polyvinylalkohol, wobei sich die Angaben in Gew.-% auf das Gesamtgewicht der Trockenmischung beziehen.

### Vergleichspulver VP11:

60 Gew.-% Ethylen-Vinylacetat-Copolymer-Dispersion, 36 Gew.-% N-(2-Aminoethyl)(3-aminopropyl)-trimethoxysilan und 4 Gew.-% Polyvinylalkohol, wobei sich die Angaben in Gew.-% auf das Gesamtgewicht der Trockenmischung beziehen.

### Herstellung von Silan-modifizierten Polymerzusammensetzungen unter Einsatz von wasserunlöslichen Polymeren in Form von in Wasser redispergierbaren Pulvern:

### Pulver P12:

Pulver P1 und Vinnapas RE 5028 N wurden im Gewichtsverhältnis 1:1 gemischt, bezogen auf das Gewicht der beiden Komponenten. Vinnapas RE 5028 N ist ein Polyvinylalkohol stabilisiertes Dispersionspulver eines Vinylacetat-Ethylen-Copolymerisats der Firma Wacker Polymer Systems.

### Pulver P13:

Pulver P2 und Vinnapas RE 5028 N wurden im Verhältnis 1:1 gemsicht, bezogen auf das Gewicht der beiden Komponenten.

### Pulver P14:

Pulver P3 und Vinnapas RE 5028 N wurden im Verhältnis 1:1 gemsicht, bezogen auf das Gewicht der beiden Komponenten.

### Pulver VP15:

Vinnapas RE 5028 N

### Dispersion 1:

Vinnapas RE 5028 N wurde in der wässrigen Lösung aus Beispiel 1 im Gewichtsverhältnis 1:1 dispergiert, wobei sich das Gewichtsverhältnis auf die Trockenmasse der beiden Komponenten bezieht.

### Dispersion 2:

Vinnapas RE 5028 N wurde in der wässrigen Lösung aus Beispiel 2 im Gewichtsverhältnis 1:1 dispergiert, wobei sich das Gewichtsverhältnis auf die Trockenmasse der beiden Komponenten bezieht.

### Dispersion 3:

Vinnapas RE 5028 N wurde in der wässrigen Lösung aus Beispiel 3 im Gewichtsverhältnis 1:1 dispergiert, wobei sich das Gewichtsverhältnis auf die Trockenmasse der beiden Komponenten bezieht.

### Ausprüfung:

Die Pulver P1 bis P4 bzw. die Vergleichspulver VP11 und VP5 wurden auf ihre Pulvereigenschaften sowie auf ihre Verarbeitungseigenschaften und Verwendbarkeit in einem zementären Fliesenkleber untersucht.

### Bestimmung der Blockfestigkeit BF:

Zur Bestimmung der Blockfestigkeit wurde das jeweilige Pulver in ein Eisenrohr mit Verschraubung gefüllt und danach mit einem Metallstempel belastet. Unter Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des jeweiligen Pulvers bestimmt. Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung des Absitzverhaltens RA:

Das Absitzverhalten der Redispersion dient als Maß für die Redispergierbarkeit der Pulvers. Die Redispersionen wurden 50 %-ig in Wasser durch Einwirkung von starken Scherkräften erzeugt.

Das Absitzverhalten wurde dann an verdünnten Redispersionen (0.5 % Festgehalt) bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an.

### Bestimmung der Haftzugfestigkeiten HZ modifizierter, zementärer Fliesenkleber:

Die Haftzugfestigkeit wurde an Hand folgender Rezeptur ausgetestet:

| | |
|---|---|
| Quarzsand | 514 Gew.-Teile |
| Zement (Portland-/Aluminat-Zementmischung) | 420 Gew.-Teile |
| Celluloseether | 4 Gew.-Teile |
| Silan-modifizierte Polymerzusammensetzung | |
| bzw. Silan-modifiziertes Additiv | 60 Gew.-Teile, |

wobei sich die Angaben in Gew.-Teile auf die Trockenmassen der einzelnen Komponenten der Rezeptur beziehen.

Der Trockenmörtel wurde mit 22 bis 24 Gew.-Teilen Wasser bezogen auf 100 Gew.-Teile Trockenmischung angerührt.

Es wurden die Haftzugfestigkeiten mit Feinsteinzeugfliesen nach EN 1348 (Fliese 1: Wasseraufnahme ≤ 0.2 Gew.-%; Fliese 2: Wasseraufnahme ≤ 0.05 Gew.-%) nach 7 Tagen Normklima und 21 Tagen Nasslagerung bestimmt.

Die Ergebnisse der Prüfung der Blockfestigkeit BF der Pulver, des Absitzverhaltens RA der Redispersionen sowie der Haftzugfestigkeiten HZ der Fliesenkleber sind in Tabelle 2 zusammengefasst.

Die Daten in Tabelle 2 belegen, dass die Pulvereigenschaften, wie beispielsweise die Blockfestigkeit BF oder das Absitzverhalten RA, der erfindungsgemäßen Silan-modifizierten Additive (P1 bis P4) zumeist besser sind als bei dem entsprechenden Vergleichspulver VP5, das nicht mit Silanen modifiziert ist. Die Pulvereigenschaften der Silan-modifizierten Polymerzusammensetzungen P8, P9 und P10 sind gegenüber dem nicht erfindungsgemäß hergestellten Pulver VP11 erheblich verbessert.

Darüber hinaus werden bei Einsatz der erfindungsgemäßen Silan-modifizierten Additive bzw. Silan-modifizierten Polymerzusammensetzungen (P1 bis P4 und P8 bis P10) in Mörteln bei der Verklebung von Fliesen hohe Haftzugfestigkeiten HZ erreicht. Mit einem entsprechenden Mörtel enthaltend das nicht erfindungsgemäß hergestellte, Silan-modifizierte Pulver VP11 wurden hingegen erheblich geringere Haftzugwerte erreicht, die mehr den Haftzugwerten von Mörteln entsprechen, die keine Silan-modifizierten Pulver enthalten (VP5).

Insbesondere bei der Verklebung von Feinsteinzeugfliesen mit einer geringen Wasseraufnahme, wie beispielsweise Fliese 2, werden mit den erfindungsgemäßen Pulvern P1 bis P4 gegenüber den Pulvern VP11 und VP5 überraschend hohe Haftzugfestigkeiten erhalten.

Tabelle 2: Austestung Silan-modifizierter Polymerzusammensetzungen:

| | BF | RA | HZ [N/mm²] | |
|---|---|---|---|---|
| | | | Fliese 1 | Fliese 2 |
| Pulver P1 | 1 | < 0,5 | 2,04 | 0,58 |
| Pulver P2 | 2 | < 0,5 | 1,99 | 0, 65 |
| Pulver P3 | 1 | < 0,5 | 1,75 | 0,70 |
| Pulver P4 | - 2 | < 0,5 | 1,44 | 0,63 |
| Pulver P8 | 2 | 0.2 | 1,24 | 0,76 |
| Pulver P9 | 1 | 0.2 | 1,36 | 0, 67 |
| Pulver P10 | 1 | 1.8 | 1,54 | 0,72 |
| Pulver VP5 | 2 | < 0,5 | 0,76 | 0,08 |
| Pulver VP11 | 4 | > 7 | 0, 62 | 0,18 |

Aus Tabelle 2 und 3 geht hervor, dass mit den erfindungsgemäßen Silan-modifizierten Additiven bzw. Silan-modifizierten Polymerzusammensetzungen Mörtel mit sehr hohen Haftzugfestigkeiten erhalten werden, und zwar unabhängig von der Art ihrer Herstellung (Pulver P1 bis P4 bzw. Pulver P8 bis P10 bzw. Pulver P12 bis P14 bzw. Dispersion 1 bis 3).

Zudem kann der Gehalt der Silan-modifizierten Additive, bzw. der Organosiliciumverbindungen in den Silan-modifizierten Polymerzusammensetzungen beliebig eingestellt werden (Pulver P8 bis P10 bzw. Pulver P12 bis P14 bzw. Dispersion 1 bis 3). Somit eröffnen die erfindungsgemäßen Silan-modifizierten Additive einen sehr vielseitigen und flexiblen Zugang zu Silan-modifizierten Polymerzusammensetzungen.

Tabelle 3: Austestung Silan-modifizierter Polymerzusammensetzungen:

| | HZ [N/mm²] | |
|---|---|---|
| | Fliese 1 | Fliese 2 |
| Pulver P12 | 1,83 | 0, 60 |
| Pulver P13 | 1, 99 | 0,52 |
| Pulver P14 | 1,92 | 0, 62 |
| Pulver VP15 | 1,12 | 0,30 |
| Dispersion 1 | 1,96 | 0, 66 |
| Dispersion 2 | 1,79 | 0,49 |
| Dispersion 3 | 1,84 | 0,51 |

## Patentansprüche

1. Silan-modifizierte Additive
erhältlich durch Kondensation von
einem oder mehreren Silanen der allgemeinen Formel
(RO)₃₋ₙR¹ₙSi(R²X) (1),
worin
R einen gegebenenfalls substituierten Alkyl-, Aryl- oder Alkoxyalkylrest mit 1 bis 10 Kohlenstoffatomen oder Wasserstoff,
R¹ einen gegebenenfalls substituierten Kohlenwasserstoffrest mit 1 bis 12 Kohlenstoffatomen oder Wasserstoff,
R² einen gegebenenfalls substituierten Alkylen-Rest mit 1 bis 20 Kohlenstoffatomen ist, in dem einander nicht benachbarte Methyleneinheiten durch Gruppen -O- ersetzt
sein können, und
X über eine kovalente Bindung an R² gebunden ist und einen Aminorest NHR³, einen Epoxyrest CR⁴(O)CR⁵R⁶, einen Urethanrest NR³-C(=O)OR³, einer Harnstoffrest NR³-C(=O)NR³R⁴, ein Phosphorsäurerest P(=O) (OH)₂, ein Anhydridrest C(=O)O(O=)CR³ oder einen Carbonsäurerest bedeutet, wobei R³ Wasserstoff oder einen gegebenenfalls substituierten Alkyl-, Aryl- oder Aminoalkyrest mit 1 bis 10 Kohlenstoffatomen bedeutet,
R⁴, R⁵, R⁶ Wasserstoff oder einen gegebenenfalls substituierten Alkyl- oder Arylrest mit 1 bis 10 Kohlenstoffatomen bedeutet,
wobei die jeweiligen Reste R¹, R², R³, R⁴, R⁵ und R⁶ ihre Werte jeweils unabhängig voneinander annehmen, und
n den Wert 0, 1, 2 oder 3 annimmt,
in einem wässrigen Lösungsmittel unter Mischen mit einem
oder mehreren wasserlöslichen Polymeren,
wobei der Gehalt an wasserlöslichen Polymeren 60 bis 97 Gew.-% und der Gehalt an Silanen 3 bis 40 Gew.-% ist, jeweils bezogen auf die Trockenmasse der Silan-modifizierten Additive, und
gegebenenfalls Trocknung der so erhaltenen wässrigen Mischung.

2. Silan-modifizierte Additive nach Anspruch 1, **dadurch gekennzeichnet, dass** die Silan-modifizierten Additive die wasserlöslichen Polymere zu 70 bis 85 Gew.-% enthalten, bezogen auf die Trockenmasse der Silan-modifizierten Additive.

3. Silan-modifizierte Additive nach Anspruch 1 oder 2, **dadurch gekennzeichnet, dass** ein oder mehrere Silane eingesetzt werden ausgewählt aus der Gruppe umfassend (3-Aminopropyl)triethoxysilan, (3-Aminopropyl)trimethoxysilan, N-(2-Aminoethyl)(3-Aminopropyl)triethoxysilan, N-(2-Aminoethyl) (3-Aminopropyl) trimethoxysilan, N-(2-Aminoethyl) (3-Aminopropyl)methyldimethoxysilan, 3-(Triethoxsilyl)propylbernsteinsäureanhydrid, N-Cyclohexylaminomethylmethyldiethoxysilan, N-(3-(Triethoxysilyl) propyl)-methylurethan, N-(3-(Trimethoxysilyl)propyl)-methylurethan, N-(3-(Triethoxysilyl)propyl)-harnstoff, N-(3-(Trmethoxysilyl)propyl)-harnstoff, (3-Glycidoxypropyl)triethoxysilan, und (3-Glycidoxypropyl)trimethoxysilan.

4. Silan-modifizierte Additive nach Anspruch 1 bis 3, **dadurch gekennzeichnet, dass** ein oder mehrere wasserlösliche Polymere eingesetzt werden ausgewählt aus der Gruppe umfassend Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Cresolformaldehydsulfonate, Styrolmaleinsäure- und Vinylethermaleinsäure-Copolymere.

5. Silan-modifizierte Additive nach Anspruch 1 bis 4, **dadurch gekennzeichnet, dass** die Silane der Formel (1) in Mengen von 10 bis 35 Gew.-% eingesetzt werden, bezogen auf das Gesamtgewicht der Bestandteile der Silan-modifizierten Additive.

6. Verfahren zur Herstellung von Silan-modifizierten Additiven, **dadurch gekennzeichnet, dass**
ein oder mehrere Silane der allgemeinen Formel
(RO)₃₋ₙR¹ₙSi(R²X) (1),
worin
R einen gegebenenfalls substituierten Alkyl-, Aryl- oder Alkoxyalkylrest mit 1 bis 10 Kohlenstoffatomen oder Wasserstoff,
R¹ einen gegebenenfalls substituierten Kohlenwasserstoffrest mit 1 bis 12 Kohlenstoffatomen oder Wasserstoff,
R² einen gegebenenfalls substituierten Alkylen-Rest mit 1 bis 20 Kohlenstoffatomen ist, in dem einander nicht benachbarte Methyleneinheiten durch Gruppen -O- ersetzt sein können, und
X über eine kovalente Bindung an R² gebunden ist und einen Aminorest NHR³, einen Epoxyrest CR⁴(O)CR⁵R⁶, einen Urethanrest NR³-C(=O)OR³, einen Harnstoffrest NR³-C(=O)NR³R⁴, ein Phosphorsäurerest P(=O)(OH)₂, ein Anhydridrest C(=O)O(O=)CR³ oder einen Carbonsäurerest bedeutet, wobei R³ Wasserstoff oder einen gegebenenfalls substituierten Alkyl-, Aryl- oder Aminoalkyrest mit 1 bis 10 Kohlenstoffatomen bedeutet,
R⁴, R,⁵ R⁶ Wasserstoff oder einen gegebenenfalls substituierten Alkyl- oder Arylrest mit 1 bis 10 Kohlenstoffatomen bedeutet,
wobei die jeweiligen Reste R¹, R², R³, R⁴, R⁵ und R⁶ ihre Werte jeweils unabhängig voneinander annehmen, und
n den Wert 0, 1, 2 oder 3 annimmt,
in einem wässrigen Lösungsmittel unter Mischen mit einem oder mehreren wasserlöslichen Polymeren kondensiert werden,
wobei der Gehalt an wasserlöslichen Polymeren 60 bis 97 Gew.-% und der Gehalt an Silanen 3 bis 40 Gew.-% ist, jeweils bezogen auf die Trockenmasse der Silan-modifizierten Additive, und
die so erhaltene wässrige Mischung gegebenenfalls getrocknet wird.

7. Verfahren zur Herstellung von Silan-modifizierten Additiven nach Anspruch 6, **dadurch gekennzeichnet, dass** die. Kondensation bei 1 bis 100 °C durchgeführt wird.

8. Verfahren zur Herstellung der Silan-modifizierten Polymerzusammensetzungen, **dadurch gekennzeichnet, dass** ein oder mehrere Silan-modifizierte Additive und ein oder mehrere wasserunlösliche Polymere gemischt werden.

9. Verwendung der Silan-modifizierten Additive aus Anspruch 1 bis 5 als Haftvermittler, Hydrophobierungsmittel oder Trocknungshilfsmittel bei der Trocknung von wässrigen Dispersionen von Polymeren.

10. Verwendung der Silan-modifizierten Additive aus Anspruch 1 bis 5 zur Herstellung von Fliesenklebern, Vollwärmeschutzklebern, Putzen, Spachtelmassen, Verlaufsmassen, Dichtschlämmen, Fugenmörtel, Spritzmörteln, Spritzbeton oder Farben.

11. Verwendung nach Anspruch 10 zur Herstellung von Fliesenklebern für Fliesen mit einer Wasseraufnahme ≤ 0.2 Gew.-%.

## Claims

1. Silane-modified additives
obtainable by condensation of
one or more silanes of the general formula
(RO) ₃₋ₙR¹ₙSi (R²X) (1),
in which
R is an optionally substituted alkyl, aryl or alkoxyalkyl radical having 1 to 10 carbon atoms or hydrogen,
R¹ is an optionally substituted hydrocarbon radical having 1 to 12 carbon atoms or hydrogen,
R² is an optionally substituted alkylene radical having 1 to 20 carbon atoms, in which non-neighbouring methylene units can be replaced by groups -O-, and
X is bonded via a covalent bond to R² and is an amino radical NHR³, an epoxy radical CR⁴ (O) CR⁵R⁶, a urethane radical NR³-C (=O) OR³, a urea radical NR³-C (=O) NR³R⁴, a phosphoric acid radical P (=O) (OH)₂, an anhydride radical C (=O) O (O=) CR³ or a carboxylic acid radical,
R³ being hydrogen or an optionally substituted alkyl, aryl or aminoalkyl radical having 1 to 10 carbon atoms,
R⁴, R⁵ R⁶ being hydrogen or an optionally substituted alkyl or aryl radical having 1 to 10 carbon atoms,
the respective radicals R¹, R², R³, R⁴, R⁵ and R⁶ assuming their values in each case independently of one another, and
n assumes the value 0, 1, 2 or 3,
in an aqueous solvent with mixing with one or more water-soluble polymers,
the content of water-soluble polymers being from 60 to 97% by weight and the content of silanes being from 3 to 40% by weight, based in each case on the dry mass of the silane-modified additives, and
optionally drying of the aqueous mixture thus obtained.

2. Silane-modified additives according to Claim 1, **characterized in that** the silane-modified additives contain from 70 to 85% by weight of the water-soluble polymers, based on the dry mass of the silane-modified additives.

3. Silane-modified additives according to Claim 1 or 2, **characterized in that** one or more silanes selected from the group consisting of (3-aminopropyl)triethoxysilane, (3-aminopropyl)-trimethoxysilane, N-(2-aminoethyl)(3-aminopropyl)-triethoxysilane, N-(2-aminoethyl)(3-aminopropyl)-trimethoxysilane, N-(2-aminoethyl)(3-aminopropyl)-methyldimethoxysilane, 3-(triethoxysilyl)propyl-succinic anhydride, N-cyclohexylaminomethylmethyl-diethoxysilane, N-(3-(triethoxysilyl)-propyl)methylurethane, N-(3-(trimethoxysilyl)-propyl)methylurethane, N-(3-(triethoxysilyl)-propyl)urea, N-(3-(trimethoxysilyl)propyl)urea, (3-glycidyloxypropyl)triethoxysilane and (3-glycidyloxypropyl)trimethoxysilane are used.

4. Silane-modified additives according to Claims 1 to 3, **characterized in that** one or more water-soluble polymers selected from the group consisting of polyvinyl alcohols; polyvinyl acetals; polyvinylpyrrolidones; polysaccharides in water-soluble form, such as starches (amylose and amylopectin), celluloses and the carboxymethyl, methyl, hydroxyethyl and hydroxypropyl derivatives thereof, dextrins and cyclodextrins; proteins, such as casein or caseinate, soybean protein, gelatin; lignosulfonates; synthetic polymers, such as poly(meth)acrylic acid, copolymers of (meth)acrylates with carboxy-functional comonomer units, poly(meth)acrylamide, polyvinylsulfonic acids and the water-soluble copolymers thereof; melamine formaldehyde sulfonates, naphthalene formaldehyde sulfonates, cresol formaldehyde sulfonates, styrene-maleic acid and vinyl ether-maleic acid copolymers are used.

5. Silane-modified additives according to Claims 1 to 4, **characterized in that** the silanes of the formula (1) are used in amounts of from 10 to 35% by weight, based on the total weight of the constituents of the silane-modified additives.

6. Process for the preparation of silane-modified additives, **characterized in that**
one or more silanes of the general formula
(RO)₃₋ₙR¹ₙSi (R²X) (1),
in which
R is an optionally substituted alkyl, aryl or alkoxyalkyl radical having 1 to 10 carbon atoms or hydrogen,
R¹ is an optionally substituted hydrocarbon radical having 1 to 12 carbon atoms or hydrogen,
R² is an optionally substituted alkylene radical having 1 to 20 carbon atoms, in which non-neighbouring methylene units can be replaced by groups -O-, and
X is bonded via a covalent bond to R² and is an amino radical NHR³, an epoxy radical CR⁴ (O) CR⁵R⁶, a urethane radical NR³-C (=O) OR³, a urea radical NR³-C (=O) NR³R⁴, a phosphoric acid radical P(=O)(OH)₂, an anhydride radical C(=O)O(O=)CR³ or a carboxylic acid radical,
R³ being hydrogen or an optionally substituted alkyl, aryl or aminoalkyl radical having 1 to 10 carbon atoms,
R⁴, R⁵, R⁶ being hydrogen or an optionally substituted alkyl or aryl radical having 1 to 10 carbon atoms,
the respective radicals R¹, R², R³, R⁴, R⁵ and R⁶ assuming their values in each case independently of one another, and
n assumes the value 0, 1, 2 or 3,
are condensed in an aqueous solvent with mixing with one or more water-soluble polymers,
the content of water-soluble polymers being from 60 to 97% by weight and the content of silanes being from 3 to 40% by weight, based in each case on the dry mass of the silane-modified additives, and
the aqueous mixture thus obtained is optionally dried.

7. Process for the preparation of silane-modified additives according to Claim 6, **characterized in that** the condensation is carried out at from 1 to 100°C.

8. Process for the preparation of the silane-modified polymer compositions, **characterized in that** one or more silane-modified additives and one or more water-insoluble polymers are mixed.

9. Use of the silane-modified additives from Claims 1 to 5 as adhesion promoters, water repellants or drying aids in the drying of aqueous dispersions of polymers.

10. Use of the silane-modified additives from Claims 1 to 5 for the production of tile adhesives, composite thermal insulation adhesives, renders, filling compounds, leveling compounds, slurry-type seal coats, joint mortars, pneumatically applied mortars, air-placed concrete or paints.

11. Use according to Claim 10 for the production of tile adhesives for tiles having a water absorption of ≤ 0.2% by weight.

## Revendications

1. Additifs modifiés avec des silanes, pouvant être obtenus par condensation d'un ou plusieurs silanes de formule générale
(RO) ₃₋ₙR¹ ₙSi (R²X) (1),
dans laquelle
R représente un radical alkyle, aryle ou alcoxyalkyle éventuellement substitué, ayant de 1 à 10 atomes de carbone, ou un atome d'hydrogène,
R¹ représente un radical hydrocarboné éventuellement substitué, ayant de 1 à 12 atomes de carbone, ou un atome d'hydrogène,
R² représente un radical alkylène éventuellement substitué, ayant de 1 à 20 atomes de carbone, dans lequel des groupes méthylène non contigus peuvent être remplacés par des groupes -O-, et
X est lié par une liaison covalente à R² et représente un radical amino NHR³, un radical époxy CR⁴ (O) CR⁵R⁶, un radical uréthane NR³-C (=O) OR³, un radical urée NR³-C(=O)NR³R⁴, un radical phosphoryle P(=O)(OH)₂, un radical anhydride C(=O)O(O=)CR³ ou un radical carboxy,
R³ représentant un atome d'hydrogène ou un radical alkyle, aryle ou aminoalkyle éventuellement substitué, ayant de 1 à 10 atomes de carbone,
R⁴, R⁵ R⁶ représentant un atome d'hydrogène ou un radical alkyle ou aryle éventuellement substitué, ayant de 1 à 10 atomes de carbone,
les radicaux respectifs R¹, R², R³, R⁴, R⁵ et R⁶ prenant leurs valeurs chaque fois indépendamment les uns des autres, et
n prenant la valeur 0, 1, 2 ou 3,
dans un solvant aqueux, avec mélange avec un ou plusieurs polymères hydrosolubles,
la teneur en polymères hydrosolubles étant de 60 à 97 % en poids et la teneur en silanes étant de 3 à 40 % en poids, à chaque fois par rapport à la matière sèche des additifs modifiés avec des silanes, et
éventuellement séchage du mélange aqueux ainsi obtenu.

2. Additifs modifiés avec des silanes selon la revendication 1, **caractérisés en ce que** les additifs modifiés avec des silanes contiennent les polymères hydrosolubles à raison de 70 à 85 % en poids, par rapport à la matière sèche des additifs modifiés avec des silanes.

3. Additifs modifiés avec des silanes selon la revendication 1 ou 2, **caractérisés en ce qu'**on utilise un ou plusieurs silanes choisis dans le groupe comprenant le (3-aminopropyl)triéthoxysilane, le (3-aminopropyl)triméthoxysilane, le N-(2-aminoéthyl)(3-aminopropyl)triéthoxysilane, le N-(2-aminoéthyl)(3-aminopropyl)triméthoxysilane, le N-(2-aminoéthyl)(3-aminopropyl)méthyldiméthoxysilane, l'anhydride 3-(triéthoxysilyl)propylsuccinique, le N-cyclohexyl-aminométhylméthyldiéthoxysilane, le N-(3-(triéthoxy-silyl)propyl)-méthyluréthane, le N-(3-(triméthoxy-silyl)propyl)-méthyluréthane, la N-(3-(triéthoxysilyl)-propyl)-urée, la N-(3-(triméthoxysilyl)propyl)-urée, le (3-glycidoxypropyl)triéthoxysilane et le (3-glycidoxy-propyl)triméthoxysilane.

4. Additifs modifiés avec des silanes selon l'une quelconque des revendications 1 à 3, **caractérisés en ce qu'**on utilise un ou plusieurs polymères hydrosolubles choisis dans le groupe comprenant des poly(alcool vinylique)s ; des polyvinylacétals ; des polyvinylpyrrolidones ; des polysaccharides sous forme hydrosoluble tels que des amidons (amylose et amylopectine), des celluloses et leurs dérivés carboxyméthyliques, méthyliques, hydroxyéthyliques, hydroxypropyliques, des dextrines et cyclodextrines ; des protéines telles que la caséine ou un caséinate, la protéine de soja, la gélatine ; les lignosulfonates ; des polymères synthétiques tels que le poly[acide (méth)acrylique], des copolymérisats de (méth)acrylates avec des unités comonomères à fonction carboxy, le poly(méth)acrylamide, des poly(acide vinylsulfonique)s et leurs copolymères hydrosolubles ; des mélamine-formaldéhydesulfonates, des naphtalène-formaldéhydesulfonates, des crésol-formaldéhydesulfonates, des copolymères styrène/acide maléique et éther vinylique/acide maléique.

5. Additifs modifiés avec des silanes selon l'une quelconque des revendications 1 à 4, **caractérisés en ce qu'**on utilise les silanes de formule (1) en des quantités de 10 à 35 % en poids, par rapport au poids total des composants des additifs modifiés avec des silanes.

6. Procédé pour la préparation d'additifs modifiés avec des silanes, **caractérisé en ce qu'**on condense un ou plusieurs silanes de formule générale
(RO)₃₋ₙR¹ₙSi (R²X) (1),
dans laquelle
R représente un radical alkyle, aryle ou alcoxyalkyle éventuellement substitué, ayant de 1 à 10 atomes de carbone, ou un atome d'hydrogène,
R¹ représente un radical hydrocarboné éventuellement substitué, ayant de 1 à 12 atomes de carbone, ou un atome d'hydrogène,
R² représente un radical alkylène éventuellement substitué, ayant de 1 à 20 atomes de carbone, dans lequel des groupes méthylène non contigus peuvent être remplacés par des groupes -O-, et
X est lié par une liaison covalente à R² et représente un radical amino NHR³, un radical époxy CR⁴(O) CR⁵R⁶, un radical uréthane NR³-C(=O)OR³, un radical urée NR³-C(=O)NR³R⁴, un radical phosphoryle P(=O)(OH)₂, un radical anhydride C(=O)O(O=)CR³ ou un radical carboxy,
R³ représentant un atome d'hydrogène ou un radical alkyle, aryle ou aminoalkyle éventuellement substitué, ayant de 1 à 10 atomes de carbone,
R⁴, R⁵, R⁶ représentant un atome d'hydrogène ou un radical alkyle ou aryle éventuellement substitué, ayant de 1 à 10 atomes de carbone,
les radicaux respectifs R¹, R², R³, R⁴, R⁵ et R⁶ prenant leurs valeurs à chaque fois indépendamment les uns des autres, et
n prenant la valeur 0, 1, 2 ou 3,
dans un solvant aqueux, en mélangeant avec un ou plusieurs polymères hydrosolubles,
la teneur en polymères hydrosolubles étant de 60 à 97 % en poids et la teneur en silanes étant de 3 à 40 % en poids, à chaque fois par rapport à la matière sèche des additifs modifiés avec des silanes, et
éventuellement on sèche le mélange aqueux ainsi obtenu.

7. Procédé pour la préparation d'additifs modifiés avec des silanes selon la revendication 6, **caractérisé en ce qu'**on effectue la condensation à une température de 1 à 100 °C.

8. Procédé pour la préparation des compositions de polymères modifiés avec des silanes, **caractérisé en ce qu'**on mélange un ou plusieurs additifs modifiés avec des silanes et un ou plusieurs polymères insolubles dans l'eau.

9. Utilisation des additifs modifiés avec des silanes selon l'une quelconque des revendications 1 à 5, en tant que promoteurs d'adhérence, agents d'hydrophobisation ou adjuvants de séchage, dans le séchage de dispersions aqueuses de polymères.

10. Utilisation des additifs modifiés avec des silanes selon l'une quelconque des revendications 1 à 5, pour la production de colles pour carreaux, de colles calorifuges, d'enduits, de mastics, de matières de nivelage, de matériaux d'étanchéité, de mortiers à joints, de mortiers projetés, de béton projeté ou de peintures.

11. Utilisation selon la revendication 10, pour la production de colles pour carreaux pour des carreaux ayant une absorption d'eau ≤ 0,2 % en poids.
